# EUROPÄISCHE PATENTSCHRIFT

(11) **EP 1 001 321 B1**
(45) Veröffentlichungstag und Bekanntmachung des Hinweises auf die Patenterteilung: **07.03.2007**
(21) Anmeldenummer: 99120495.9
(22) Anmeldetag: 15.10.1999
(51) Int. Cl.: G05B 19/042

(54) **Steuerung für ein Elektrogerät**
Control of an electrical device
Commande pour un appareil électrique

(30) Priorität: 24.10.1998 DE 19849075
(43) Veröffentlichungstag der Anmeldung: 17.05.2000
(73) Patentinhaber: E.G.O. ELEKTRO-GERÄTEBAU GmbH, 75038 Oberderdingen (DE)
(72) Erfinder: Essig, Willi, 71034 Böblingen (DE)
(74) Vertreter: Patentanwälte Ruff, Wilhelm, Beier, Dauster & Partner

(56) Entgegenhaltungen:
- EP-A- 0 356 662
- EP-A- 0 457 940
- DE-U- 29 622 066

## Beschreibung

Die Erfindung betrifft eine Steuerung für ein Elektrogerät mit wenigstens einer in dem Gerät enthaltenen elektrischen Funktionseinrichtung, wobei die Steuerung wenigstens eine Leistungsschalteinrichtung enthält. Bevorzugt findet die Erfindung Anwendung bei einem Elektrowärmegerät, insbesondere einem Haushaltselektroherd oder einem Haushaltsbackofen.

Die DE-U 296 22 066 schlägt ein Hausgerät vor, dem in Erweiterung der üblichen Bauform wenigstens ein separates Bedien- und/oder Anzeigeelement zugeordnet ist. Dieses ähnelt vom Funktionsprinzip her beispielsweise einer Fernbedienung für ein Fernsehgerät, in der sozusagen aus dem Elektrogerät herausgetrennte Bedienknöpfe bzw. Schalter enthalten sind. Zusätzlich ist hier eine bidirektionale Datenübertragung vorgesehen, um an einem von dem Elektrogerät getrennten Anzeigeelement betriebsrelevante Daten abzulesen.

Weiters sind beispielsweise in der DE 196 15 357 Lösungen vorgeschlagen worden, bei denen lediglich separate Anzeige elemente für den Betriebszustand des Elektrogerätes vorgesehen sind, die die am Elektrogerät eingestellten Programmparameter eingespeichert bekommen und anschließend den dazugehörigen Programmablauf intern nachbilden und jeweils anzeigen.

Die EP 846 991 beschreibt einen Haushaltsgeräteverbund mit einem zentralen Leitrechner zur Überwachung. Zur verbesserten Verfügbarkeit der Informationen ist diese zentrale Überwachung mit einer mobilen Anzeigevorrichtung per einseitiger Fernwirktechnik verbunden.

Die DE 197 53 345 beschreibt eine Möglichkeit zur Ferndiagnose von Gerätemängeln. Eine Anzeigevorrichtung übermittelt den Mangel betreffende Daten per Übertragungseinrichtung und Fernsprechnetz an eine Diagnosestelle, insbesondere einen Computer bei einem Kundendienstzentrum o. dgl.

Die EP 356 662 A2 beschreibt eine Fernbedienung mit Mikroprozessor und Eingabeelemente sowie Sendeeinrichtung, die zur Steuerung verschiedener Elektrogeräte im Haushalt verwendet werden kann. In der Fernbedienung sind verschiedene Ablaufprogramme für die Elektrogeräte abgespeichert und können je nach Bedarf abgerufen werden. Dabei ist die Bedienung der verschiedenen Elektrogeräte im Sende-/Empfangsbereich der Fernbedienung sowie der Elektrogeräte von beliebiger Position aus möglich.

Problematisch beim Stand der Technik ist, daß bekannte separate Bedieneinheiten bzw. Fernbedienungen derart ausgelegt sind, daß eine bestimmte Kombination von ihnen bzw. der Bedienmöglichkeiten mit einem dazugehörigen Elektrogerät festgelegt ist.

### AUFGABE UND LÖSUNG

Der Erfindung liegt die Aufgabe zugrunde, eine oben beschriebene Steuerung zu schaffen, die die Nachteile des Standes der Technik vermeidet, die Bedienung von Elektrogeräten verbessert sowie vielfältige Anwendungen eröffnet.

Gelöst wird diese Aufgabe durch die Merkmale des Anspruchs 1. Vorteilhafte Ausgestaltungen der Erfindung sind Gegenstand der Unteransprüche sowie der folgenden Beschreibung.

Erfindungsgemäß weist die Steuerung eine von dem Elektrogerät separate, trennbare bzw. wegnehmbare Steuereinheit auf, welche drahtlos signalübertragend mit dem Elektrogerät verbunden ist. Solche drahtlosen bzw. kontaktlosen Fernwirktechniken können beispielsweise eine Verbindung mit Infrarot oder mittels elektromagnetischer Wellen beinhalten. Die separate Steuereinheit enthält dabei im wesentlichen den Steuer- und Regelungsteil für das Elektrogerät, der die wenigstens eine Leistungsschalteinrichtung, die vorzugsweise in dem Elektrogerät eingebaut ist, ansteuert. Bevorzugt ist der gesamte Steuer- und Regelungsteil in der Steuereinheit angeordnet, bis auf in dem Elektrogerät enthaltene Sensoren o. dgl., die Meß- bzw. Regelgrößen liefern. Somit erfolgt eine räumliche Auftrennung der Steuerung in einen Leistungsschaltteil, der in dem Elektrogerät sitzt, und einen Steuer- und Regelungsteil, der in der separaten Steuereinheit angeordnet ist.

Es ist möglich, die Steuereinheit frei handhabbar zu gestalten, so daß sie von dem Elektrogerät weggenommen werden kann. Auf diese Weise ist ein sehr einfaches Austauschen der Steuereinheit bzw. des Steuer- und Regelungsteils möglich, insbesondere ohne das Elektrogerät zu öffnen oder aufwendige Arbeiten daran durchführen zu müssen, ebenso ist ein Steuern von einer beliebigen Stelle aus möglich. Die Steuereinheit kann eine Verarbeitungseinrichtung aufweisen, vorzugsweise wenigstens einen Mikroprozessor. Diese Verarbeitungseinrichtung kann im wesentlichen den Steuer- und Regelungsteil für das Elektrogerät bilden.

Vorteilhaft sind der Steuereinheit Eingabemittel zur Eingabe von Steuerbefehlen und dergleichen zugeordnet, insbesondere Schalter wie beispielsweise Berührungsschalter, Drehschalter und/oder Druckschalter. Vorzugsweise ist die Steuereinheit mit den Eingabemitteln in einem Bedienteil untergebracht, das jedoch im Vergleich zu üblichen Fernbedienungen eine vollwertige Fernsteuerung sein kann.

Des weiteren kann die Steuerung einen Speicher aufweisen, in dem unter anderem verschiedene Programmabläufe für die Steuerung und/oder Parameter von Auswertungsfunktionen des Elektrogerätes speicherbar sind. Solche Parameter von Auswertungsfunktionen können beispielsweise beim Einrichten des Elektrogerätes ermittelt und eingespeichert werden. Möglich ist des weiteren eine Einspeicherung von serienspezifischen Daten des Elektrogerätes. Bevorzugt ist der Speicher in der Steuereinheit angeordnet bzw. der Verarbeitungseinrichtung direkt zugeordnet.

Übertragungseinrichtungen können in dem Elektrogerät und der Steuereinheit zur drahtlosen Signalübertragung für die bzw. innerhalb der Steuerung vorhanden sein. Vorzugsweise arbeiten die Übertragungseinrichtungen bidirektional, das bedeutet sowohl in der Steuereinheit als auch in dem in dem Elektrogerät sitzenden Teil der Steuerung ist sowohl eine Sende- als auch eine Empfangseinrichtung eingebaut. Es ist möglich, daß der Steuerung Anzeigemittel zur Darstellung des Betriebszustandes der Steuerung und/oder des Elektrogerätes zugeordnet sind, vorzugsweise in der separaten Steuereinheit angeordnet sind. Anzeigemittel können beispielsweise einfache Leuchtanzeigen, LC-Displays sowie alphanumerische Anzeigen sein.

Das Elektrogerät kann mit Sensoren zur Überwachung des Betriebszustandes, beispielsweise einer der Funktionseinheiten, versehen sein. Die Signale derartiger Sensoren können an die Steuerung bzw. die Steuereinheit gegeben werden, die damit beispielsweise Regelschleifen für das Elektrogerät bilden können, oder diese Betriebszustände mittels Anzeigemittel an der Steuereinheit zur Information eines Benutzers darstellen.

Die Steuerung und/oder das Elektrogerät können eine Ortserfassungseinrichtung zur Erfassung der räumlichen Zuordnung der Steuereinheit zu dem Elektrogerät aufweisen. Die räumliche Zuordnung kann beispielsweise als wenigstens eine bestimmte Position der Steuereinheit nach Richtung/Entfernung vorgegeben sein, wobei dies im wesentlichen ein genauer Ort oder ein begrenzter Bereich sein kann. Es ist möglich, die Steuereinheit beispielsweise innerhalb eines bestimmten Abstandes zu dem Elektrogerät zu erfassen. Eine Alternative kann eine bestimmte Position der Steuereinheit sein, insbesondere an deren Oberseite des Elektrogeräts selber bzw. einer für einen Benutzer frei zugänglichen Stelle. Diese bestimmte Position kann markiert sein, beispielsweise optisch mittels farblicher Markierung oder durch mechanische Anschläge bzw. Rasten.

Eine solche Ortserfassungseinrichtung ermöglicht es beispielsweise, mit der Steuereinheit das Elektrogerät nur dann zu bedienen, wenn die Steuereinheit in der bestimmten Position ist. Somit lassen sich Fehlbedienungen sowie ein Bedienen durch nicht vorgesehene Benutzer, beispielsweise durch spielende Kinder an einem Haushaltsgerät, vermeiden; die Steuereinheit wird einfach getrennt von dem Gerät an einem nicht offen zugänglichen Ort aufbewahrt. Eine Möglichkeit ist eine kontaktlose Ortserfassungseinrichtung, insbesondere drahtlos mit einer Sendeeinrichtung und einer Empfangseinrichtung, wobei die Empfangseinrichtung vorzugsweise in der Steuereinheit enthalten ist. Kontaktlos kann hier bevorzugt bedeuten, daß die Ortserfassung ohne jeglichen Kontakt zur Erfassung an sich arbeitet. Die Ortserfassungseinrichtung kann beispielsweise induktiv arbeiten.

Eine Alternative zu einer Ortserfassungseinrichtung kann eine mit dem Elektrogerät und/oder der Steuerung signalübertragend verbundene und an einer vorgebbaren Position angebrachte Station und/oder Halterung sein, an der die Steuereinheit anzubringen ist, was der Steuerung mitgeteilt wird. Eine besonders einfache Erkennung einer an der Station angebrachten Steuereinheit kann durch betätigte Kontakte erfolgen.

Insbesondere bei einer an dem Elektrogerät anzubringenden Steuereinheit können Haltemittel zur werkzeuglos lösbaren Fixierung in einer bestimmten Position vorgesehen sein. Diese Haltemittel können vorzugsweise Magnethalterungsmittel und/oder Magnetausrichtungsmittel aufweisen. Diese können vorteilhaft unter glatten, undurchbrochenen Oberflächen wie beispielsweise Glasflächen o. dgl. angebracht werden. Die Haltemittel können weiters Bestandteil einer Ortserfassungseinrichtung für die Steuereinheit sein. Insbesondere kann ein Aktivieren der Fixierung bzw. Anbringen der Steuereinheit an den Haltemitteln die Erfassung der Steuereinheit in der bestimmten Position sein.

Zur Energieversorgung kann die Steuereinheit mit einer eigenen Quelle versehen sein, vorzugsweise einem wieder aufladbaren Energiespeicher, wie einem Akkumulator. Bevorzugt wird eine Energieversorgung, mit der die Steuereinheit lösbar verbindbar ist, wobei eine solche Verbindung vorzugsweise eine bestimmte räumliche Zuordnung der Steuereinheit zu dem Elektrogerät bedingt. Demgemäß kann die Steuereinheit nur arbeiten, wenn sie mit Energie versorgt wird, wozu sie sich in einer oben beschriebenen bestimmten Position befinden muß. Es können drahtlose Übertragungseinrichtungen für die Signalübertragung und die Energieversorgung der Steuereinheit vorgesehen sein, die vorzugsweise induktiv arbeiten. Dies ermöglicht die Vermeidung blanker elektrischer Kontakte. Eine Doppelfunktion der Übertragungseinrichtungen, beispielsweise mit getrennten Sendefenstern, reduziert den Aufwand.

Die Steuerung kann, insbesondere in dem in dem Elektrogerät enthaltenen Teil, eine Leistungsschalteinrichtung enthalten, die für das Zusammenwirken mit verschiedenen Steuereinheiten bzw. Typen von Steuereinheiten ausgebildet ist. Diese verschiedenen Steuereinheiten enthalten jeweils den Steuer- und Regelungsteil für das Elektrogerät, wobei sie unterschiedliche Funktionsmerkmale hinsichtlich Ausstattung, Steuermöglichkeiten o. dgl. aufweisen können. Auf diese Weise ist es möglich, sowohl einfache Steuereinheiten mit reinen Bedienelementen vorzusehen sowie weiter aufgerüstete Steuereinheiten, die Zusatzfunktionen wie Zeitschaltuhren, Programmabläufe etc. aufweisen. Eine Grundversion eines Elektrogerätes kann so nachträglich individuell um- bzw. aufgerüstet werden, wobei die als Aufrüstung gewünschten Zusatzfunktionen sämtlich in der Steuereinheit verwirklicht sind.

Erfindungsgemäß ist die Steuerung in ein Elektrowärmegerät mit einem Kochfeld eingebaut, das insbesondere aus Glaskeramik besteht. Eine oben beschriebene separate Steuereinheit ist auf eine vorgegebene Stelle auf dem Kochfeld positionierbar und wirkt somit wie eine an diese Stelle fest eingebaute Bedieneinheit. Dabei kann das Elektrogerät nur bei in dieser Position vorhandener Steuereinheit bedient bzw. betrieben werden. Ein weiterer Vorteil der vorliegenden Erfindung liegt darin, daß bei einer Fehlfunktion bzw. einem irreparablen Schaden nicht das gesamte Elektrogerät samt Steuerung ersetzt werden muß, sondern lediglich das Elektrogerät oder die Steuereinheit.

Des weiteren ist Teil der Erfindung ein fernsteuerbares Elektrogerät, insbesondere mit einer oben beschriebenen Steuerung steuerbar, das wenigstens eine Leistungsschalteinrichtung enthält und im wesentlichen frei von Bedienelementen und/oder Steuer- und Regelungsteile ist. Es kann mit verschiedenen Typen von Steuereinheiten durch drahtlose Signalübertragung steuerbar sein, wobei diese Steuereinheiten als von dem Elektrogerät separate Einheiten ausgebildet sind und sämtliche Steuer- und Regelteile für das Elektrogerät enthalten.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNG

In der Zeichnung ist ein bevorzugtes Ausführungsbeispiel der Erfindung dargestellt und wird im folgenden näher beschrieben. Die Zeichnung zeigt schematisch ein Elektroherd mit einer Steuerung, die eine von dem Elektrogerät separate Steuereinheit aufweist.

### DETAILLIERTE BESCHREIBUNG DES AUSFÜHRUNGSBEISPIELS

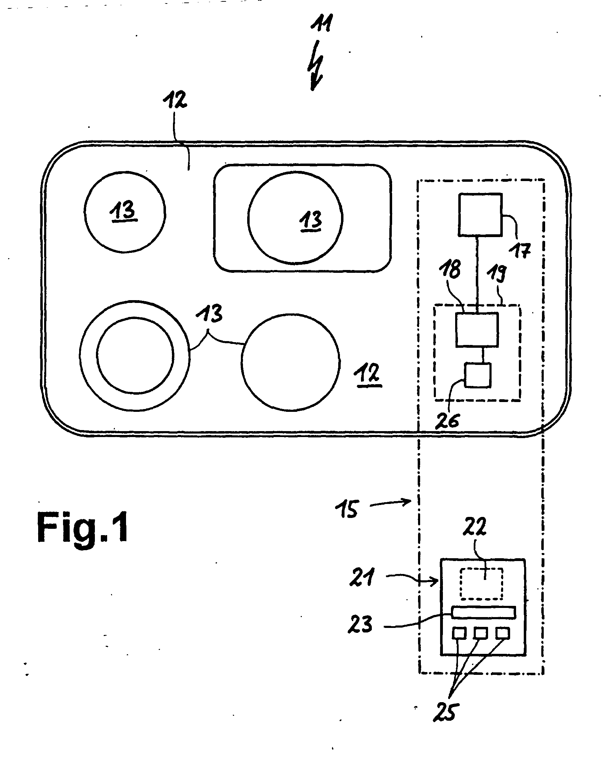

Die Fig. 1 zeigt ein Elektrokochgerät 11 mit einem Kochfeld 12, das Heizeinrichtungen 13 sowie, durch eine umgebende Strichpunktierung als funktionelle Einheit gekennzeichnet, eine erfindungsgemäße Steuerung 15. In der schematisch gehaltenen Zeichnung enthält das Kochgerät 11 eine Leistungsschalteinrichtung 17, die entweder eine oder alle Heizeinrichtungen 13 mit Leistung beaufschlagt. Ihre Steuerbefehle erhält die Leistungsschalteinrichtung 17 von der ersten Übertragungseinrichtung 18, mit der sie wie dargestellt verbunden ist. Die Übertragungseinrichtung 18 befindet sich unter einer gestrichelt dargestellten Aufsetzmarkierung 19 im rechten unteren Teil des Kochfeldes 12.

Dem Elektrokochgerät 11, bzw. insbesondere der ersten Übertragungseinrichtung 18, ist eine separate Steuereinheit 21 zugeordnet, die eine gestrichelt dargestellte zweite Übertragungseinrichtung 22, eine Verarbeitungseinrichtung 23 sowie Ein- und Ausgabemittel 25 aufweist. Die zweite Übertragungseinrichtung 22 wirkt zusammen mit der ersten Übertragungseinrichtung 18. Die Verarbeitungseinrichtung 23 weist bevorzugt unter anderem einen Mikroprozessor sowie einen Speicher für Parameter und/oder Betriebsabläufe auf. Die Ein- und Ausgabemittel 25 können verschiedene Schalter, beispielsweise Berührungsschalter, sowie Anzeigen, beispielsweise Leuchtanzeigen oder alphanumerische Anzeigen, aufweisen.

Gemäß einer prinzipiell möglichen Ausführung kann in jeder Position mit der Steuereinheit 21 das Elektrokochgerät 11 über Datenübertragung zwischen den Übertragungseinrichtungen 18 und 22 sowie die Leistungsschalteinrichtung 17 bedient bzw. gesteuert werden. Die Steuerbefehle und/oder der Betriebszustand des Elektrokochgerätes kann an den Ein- und Ausgabemitteln 25 angezeigt werden. Bevorzugt ist jedoch eine Bedienung nur möglich, wenn sich die Steuereinheit 21 auf der Aufsetzmarkierung 19 befindet. Ein Arretieren bzw. genaues Einhalten der Position kann einerseits durch Anschläge o. dgl. erreicht werden, vorteilhaft ist alternativ eine magnetische Fixierung möglich, die keine Unterbrechungen der glatten Oberfläche des Kochfeldes 12 benötigt. Ob die Steuereinheit in der vorgegebenen Bedienposition ist, kann entweder mittels der Übertragungseinrichtungen 18 und 22 ermittelt werden, alternativ über ihre Fixierung auf der Markierung 19 oder, wie dargestellt, durch eine Ortserfassungseinrichtung 26. Diese Ortserfassungseinrichtung 26 kann ein Nährungsschalter, ein mechanischer Schalter, oder beispielsweise ein induktiver Sensor sein. Alternativ oder zusätzlich zu einer Aufsetzmarkierung 19 auf dem Kochfeld 12 sind andere Orte für die Steuereinheit 21 denkbar, an denen ein Anbringen erfaßt und als Voraussetzung für ein Bedienen des Elektrokochgerätes 11 benutzt werden kann.

### FUNKTION

Wie schon vorgehend beschrieben, enthält die Steuereinheit 21 bevorzugt den gesamten Steuer- und Regelungsteil für das Elektrokochgerät. Befindet sich die Steuereinheit 21 in einer gewünschten geometrischen Position, ist eine Bedienung des Elektrokochgerätes 11 erst möglich. Dies kann einerseits durch eine interne Sperre, beispielsweise in der Verarbeitungseinrichtung 23, erfolgen. Andererseits ist es möglich, die Übertragungseinrichtungen 18 und 22 bei einer in Fig. 1 dargestellten Aufsetzmarkierung 19 auf dem Kochfeld 12 derart auszubilden, daß sie lediglich eine geringe Reichweite aufweisen. Erreicht werden kann dies z.B. durch induktive Übertragung. Auf diese Weise muß sich die Steuereinheit 21 auf der Aufsetzmarkierung 19 befinden, eventuell in einer einzigen genauen Position, damit eine Signalübertragung stattfinden kann. Alternative Übertragungsarten sind Infrarot, Ultraschall, Funk o. dgl.

Eine Bedienperson gibt bei korrekt aufgesetzter und damit freigegebener Steuereinheit 21 über die Eingabemittel 25 Steuerbefehle ein, die von der Verarbeitungseinrichtung 23 in Schaltbefehle umgesetzt werden, welche über die Übertragungseinrichtungen 22 und 18 an die Leistungsschalteinrichtung 17 gegeben werden. Diese beaufschlagt gemäß den Befehlen die Heizeinrichtungen 13. Die Steuerbefehle können durchaus unter Verwendung von Informationen aus dem Elektrogerät gebildet werden. An einem Ausgabemittel 25 der Steuereinheit wird beispielsweise eine auf eine bestimmte Stufe eingestellte Heizeinrichtung 13 angezeigt.

Ein Vorteil der vorliegenden Erfindung liegt darin, daß, um die Funktionsvielfalt des Elektrogerätes 11 zu erweitern, lediglich die separate Steuereinheit 21 ausgetauscht werden muß. In einer neuen Steuereinheit können beispielsweise Zusatzfunktionen wie Zeitschaltuhren, automatisches Kochen bzw. verschiedene Programmabläufe, verschiedene Topferkennungsfunktionen o. dgl. möglich sein. Ein Austauschen des bestimmenden Teils der Steuerung 15 ist auf diese Weise einfach möglich.

Dem Elektrokochgerät 11 bzw. den Heizeinrichtungen 13 können nicht dargestellte Sensoreinrichtungen zugeordnet sein, beispielsweise Temperatursensoren oder Protektoren. Mittels der Temperatursensoren kann beispielsweise die Temperatur einer Heizeinrichtung 13 erfaßt werden und über die Übertragungseinrichtungen 18 und 22 an die Steuereinheit 21 bzw. die Verarbeitungseinrichtung 23 übergeben werden. Diese Information kann zur Aktivierung einer Heißanzeige oder für automatische Kochabläufe genutzt werden. Ebenso sind Protektoren möglich, die im Ernstfall allerdings direkt die Leistungszufuhr zu der Heizeinrichtung unterbrechen können.

Eine Energieversorgung der Steuereinheit 21 kann entweder durch eingesetzte Batterien bzw. Akkumulatoren erfolgen. Alternativ ist eine induktive Energieversorgung bei auf die Aufsetzmarkierung 19 aufgesetzter Steuereinheit 21 möglich. Eventuell kann eine induktive Energieversorgung im Fenster-Betrieb über eine induktive Datenschnittstelle erfolgen.

Eine einzige Steuereinheit 21 kann für eine komplette Gerätefamilie (Kochfeld, Backofen, Dunstabzugshaube, Mikrowellengerät, etc.) eingesetzt werden. Ein Wechsel kann entweder durch Umschalten an der Steuereinheit oder durch Wechsel der Aufsetzmarkierung bzw. einer jeweils vorgegebenen Position erfolgen. Zur Rationalisierung des Herstellungsprozesses können wenige Grundmodelle von Elektrokochgeräten 11 standardisiert aufgebaut werden, die mittels unterschiedlicher Steuereinheiten unterschiedlich wertige bzw. ausgestattete Elektrokochgeräte ergeben. Dies hat den Vorteil, daß vor allem die Leistungsschalteinrichtungen 17 für eine Vielzahl von verschiedenen Elektrokochgeräten gleich ausgeführt sein können.

An dem Elektrogerät können gewisse Schalt- bzw. Anzeigefunktionen belassen werden, beispielsweise ein allgemeiner EIN/AUS-Schalter, Zustandsarretierungsschalter für ein Entfernen der Steuereinheit im Betrieb oder Heißanzeiger für eine heiße Heizeinrichtung.

## Patentansprüche

1. Steuerung (15) für ein Elektrogerät (11) mit wenigstens einer in dem Gerät enthaltenen elektrischen Funktionseinrichtung (13), wobei die Steuerung (15) wenigstens eine Leistungsschalteinrichtung (17) enthält und ferner eine von dem Elektrogerät (11) separate Steuereinheit (21) aufweist, die drahtlos signalübertragend mit dem Elektrogerät verbunden ist und im wesentlichen den Steuer- und Regelungsteil für das Elektrogerät enthält, **dadurch gekennzeichnet, daß** sie in ein Elektrowärmegerät (11) mit einem Kochfeld (12) eingebaut ist, wobei eine separate Steuereinheit (21) auf eine vorgegebene Stelle auf dem Kochfeld positionierbar ist und das Elektrowärmegerät nur bei in dieser Position vorhandener Steuereinheit funktionsfähig ist.

2. Steuerung nach Anspruch 1, **dadurch gekennzeichnet, daß** die Steuereinheit (21) frei handhabbar ist.

3. Steuerung nach Anspruch 1 oder 2, **dadurch gekennzeichnet, daß** der Steuereinheit (21) Eingabemittel (25) zur Eingabe von Steuerbefehlen zugeordnet sind.

4. Steuerung nach einem der vorhergehenden Ansprüche, **dadurch gekennzeichnet, daß** sie einen Speicher aufweist, in dem verschiedene Programmabläufe für die Steuerung (15) und/oder Parameter von Auswertungsfunktionen speicherbar sind, wobei der Speicher in der Steuereinheit (21) angeordnet ist.

5. Steuerung nach einem der vorhergehenden Ansprüche, **gekennzeichnet durch** jeweils eine Übertragungseinrichtung (18, 22) zur drahtlosen Signalübertragung für die Steuerung (15) und das Elektrogerät (11).

6. Steuerung nach einem der vorhergehenden Ansprüche, **dadurch gekennzeichnet, daß** die Steuerung (15) und das Elektrogerät (11) eine Ortserfassungseinrichtung (26) zur Erfassung der räumlichen Zuordnung von der Steuereinheit (21) zu dem Elektrogerät aufweisen, wobei diese räumliche Zuordnung als wenigstens eine bestimmte Position der Steuereinheit nach Richtung und Entfernung vorgegeben ist.

7. Steuerung nach Anspruch 6, **dadurch gekennzeichnet, daß** die wenigstens eine bestimmte Position der Steuereinheit (21) an dem Elektrogerät (11) ist.

8. Steuerung nach Anspruch 6 oder 7, **gekennzeichnet durch** eine kontaktlose Ortserfassungseinrichtung (26) mit einer Sendeeinrichtung und einer Empfangseinrichtung, die der Steuereinheit (21) zugeordnet ist.

9. Steuerung nach einem der vorhergehenden Ansprüche, **dadurch gekennzeichnet, daß** Haltemittel zur werkzeuglos lösbaren Fixierung der Steuereinheit (21) an dem Elektrogerät (11) in einer bestimmten Position vorgesehen sind.

10. Steuerung nach einem der vorhergehenden Ansprüche, **dadurch gekennzeichnet, daß** der Steuereinheit (21) eine Energieversorgung zugeordnet ist, mit der sie lösbar verbindbar ist, wobei die Verbindung der Steuereinheit mit der Energieversorgung eine bestimmte räumliche Zuordnung der Steuereinheit zu dem Elektrogerät (11) vorgibt.

11. Steuerung nach einem der vorhergehenden Ansprüche, **gekennzeichnet durch** eine Leistungsschalteinrichtung (17), die in das Elektrogerät eingebaut ist, für das Zusammenwirken mit mehreren verschiedenen Steuereinheiten (21), wobei diese verschiedenen Steuereinheiten den Steuer- und Regelungsteil für das Elektrogerät (11) enthalten und unterschiedliche Funktionsmerkmale hinsichtlich Ausstattung oder Steuermöglichkeiten aufweisen.

12. Fernsteuerbares Elektrogerät mit einer Steuerung (15) nach einem der vorhergehenden Ansprüche steuerbar, **dadurch gekennzeichnet, daß** es wenigstens eine Leistungsschalteinrichtung (17) enthält und frei von Bedienelementen oder Steuer- und Regelungsteilen ist, wobei es mit verschiedenen Steuereinheiten (21) durch drahtlose Signalübertragung steuerbar ist, wobei die Steuereinheiten separat von dem Elektrogerät (11) ausgebildet sind und sämtliche Steuer- und Regelungsteile für das Elektrogerät enthalten.

## Claims

1. Control (15) for an electrical appliance (11) with at least one function device (13) contained in the appliance, with the control (15) containing at least one power switching device (17) and furthermore having a control unit (21) separate from the electrical appliance (11) which is connected to the electrical appliance to permit wireless signal transmission and which contains substantially the control and regulation part for the electrical appliance, **characterized in that** the control is incorporated into an electrical heating appliance (11) having a cooking hob (12), with a separate control unit (21) being positionable at a predetermined place on the cooking hob and the electrical heating appliance being operative only when the control unit is in this position.

2. Control according to Claim 1, **characterized in that** the control unit (21) can be freely handled.

3. Control according to Claim 1 or 2, **characterized in that** input means (25) for entering control commands are assigned to the control unit (21).

4. Control according to one of the preceding claims, **characterized in that** it has a memory in which various program sequences for the control (15) and/or parameters of evaluation functions can be stored, with the memory being arranged inside the control unit (21).

5. Control according to one of the preceding claims, **characterized by** a wireless signal transmission device (18, 22) for the control (15) and for the electrical appliance (11) respectively.

6. Control according to one of the preceding claims, **characterized in that** the control (15) and the electrical appliance (11) have a location recording device (26) for recording the spatial relationship of the control unit (21) to the electrical appliance, with this spatial relationship being predetermined as at least one defined position of the control unit in terms of direction and distance.

7. Control according to Claim 6, **characterized in that** the at least one defined position of the control unit (21) is on the electrical appliance (11).

8. Control according to Claim 6 or 7, **characterized by** a non-contact location recording device (26) having a transmitting device and a receiving device assigned to the control unit (21).

9. Control according to one of the preceding claims, **characterized in that** holding means are provided for removable fixing in a defined position of the control unit (21) to the electrical appliance (11) without tools.

10. Control according to one of the preceding claims, **characterized in that** an energy supply is assigned to the control unit (21) to which it is removably connectable, with the connection of the control unit to the energy supply predetermining a defined spatial relationship of the control unit to the electrical appliance (11).

11. Control according to one of the preceding claims, **characterized by** a power switching device (17) incorporated into the electrical appliance (11) for interaction with several different control units (21), with these different control units containing the control and regulation part for the electrical appliance (11) and having different function features as regards equipment or control options.

12. Remote controlled electrical appliance with a control (15) controllable according to one of the preceding claims, **characterized in that** it contains at least one power switching device (17) and is free of operating elements or control and regulation parts, with the electrical appliance (11) being controllable using various control units (21) by wireless signal transmission and with the control units being designed separate from the electrical appliance and containing all control and regulation parts for the electrical appliance.

## Revendications

1. Commande (15) pour un appareil électrique (11) avec au moins un dispositif opérationnel électrique (13) appartenant à l'appareil, la commande (15) comprenant au moins un moyen d'ouverture et de fermeture d'un circuit de puissance (17) et présentant en outre une unité de commande (21) distincte de l'appareil électrique (11), qui est raccordée sans fil avec l'appareil électrique en transmettant des signaux et qui comprend en substance l'élément de commande et de réglage pour l'appareil électrique, **caractérisée en ce qu'**elle est montée dans un appareil électrique de chauffe (11) présentant un champ de cuisson (12), sachant qu'une unité de commande (21) distincte peut être positionnée à un endroit prédéterminé sur le champ de cuisson et que l'appareil électrique de chauffe ne se trouve en état opérationnel que si l'unité de commande se trouve dans cette position.

2. Commande d'après la revendication 1, **caractérisée en ce que** l'unité de commande (21) peut être manoeuvrée librement.

3. Commande d'après la revendication 1 ou 2, **caractérisée en ce que** des moyens d'entrée (25) sont associés à l'unité de commande (21) pour l'entrée d'instructions de commande.

4. Commande d'après une des revendications précédentes, **caractérisée en ce qu'**elle comprend une mémoire, où on peut mémoriser différents formes de programme pour la commande (15) et/ou des paramètres pour des fonctions d'évaluation, sachant que la mémoire est disposée dans l'unité de commande (21).

5. Commande d'après une des revendications précédentes, **caractérisée** respectivement par un dispositif de transmission (18, 22) pour la transmission de signaux sans fil pour la commande (15) et l'appareil électrique (11).

6. Commande d'après une des revendications précédentes, **caractérisée en ce que** la commande (15) et l'appareil électrique (11) présentent un dispositif de localisation (26) pour détecter la relation spatiale entre l'unité de commande (21) et l'appareil électrique, sachant que cette relation spatiale est prédéterminée au moins en tant qu'une position précise de l'unité de commande d'après sa distance et son orientation.

7. Commande d'après la revendication 6, **caractérisée en ce qu'**au moins cette position déterminée de l'unité de commande (21) se trouve sur l'appareil électrique (11).

8. Commande d'après la revendication 6 ou 7, **caractérisée par** un dispositif de localisation (26) associé à l'unité de commande (21), avec un moyen d'émission et un moyen de réception.

9. Commande d'après une des revendications précédentes, **caractérisée en ce qu'**on prévoit des moyens de support pour la fixation sans outils et séparable de l'unité de commande (21) sur l'appareil électrique (11) dans une position bien déterminée.

10. Commande d'après une des revendications précédentes, **caractérisée en ce qu'**une alimentation en énergie est associée à l'unité de commande (21), avec laquelle elle peut être raccordée de manière séparable, sachant que le raccordement de l'unité de commande à l'alimentation en énergie prédétermine une relation spatiale spécifique entre l'unité de commande et l'appareil électrique (11).

11. Commande d'après une des revendications précédentes, **caractérisée par** un moyen d'ouverture et de fermeture d'un circuit de puissance (17), qui est intégré dans l'appareil électrique, pour l'action conjointe de plusieurs unités de commande (21), sachant que ces différentes unités de commande contiennent l'élément de commande et de réglage pour l'appareil électrique (11) et présentent différentes caractéristiques de fonctionnement concernant l'équipement ou les possibilités de contrôle.

12. Appareil électrique télécommandable commandable par une commande (15) d'après une des revendications précédentes, **caractérisé en ce qu'**il comprend au moins un moyen d'ouverture et de fermeture d'un circuit de puissance (17) et qu'il ne présente aucun organe de service ou élément de commande et de réglage, sachant qu'il peut être commandé par une transmission de signaux sans fil avec différentes unités de commande (21), sachant que les unités de commande sont réalisées en étant distinctes de l'appareil électrique (11) et contiennent tous les éléments de commande et de réglage de l'appareil électrique.
